# EUROPEAN PATENT SPECIFICATION

(11) **EP 3 370 220 B1**
(45) Date of publication and mention of the grant of the patent: **12.06.2019**
(21) Application number: 17159159.7
(22) Date of filing: 03.03.2017
(51) Int. Cl.: G09B 23/28, G09B 19/00

(54) **SYSTEM FOR THE FORMATIVE TESTING OF CARDIOPULMONARY RESUSCITATION SKILLS**
SYSTEM ZUR FORMATIVEN PRÜFUNG VON KARDIOPULMONALEN WIEDERBELEBUNGSFÄHIGKEITEN
SYSTÈME POUR LE TEST FORMATIF DES COMPÉTENCES DE RÉANIMATION CARDIO-PULMONAIRE

(43) Date of publication of application: 05.09.2018
(73) Proprietor: Pinga Group bvba, 9000 Gent (BE)
(72) Inventor: Mpotos, Nicolas, 9000 Gent (BE)
(74) Representative: Brantsandpatents bvba

(56) References cited:
- WO-A1-2017/029398
- US-A1- 2013 218 055
- US-A1- 2015 325 148
- US-A1- 2016 012 752
- US-A1- 2016 335 921

## Description

### Technical field

The invention pertains to a system and a computer program product for the formative testing of cardiopulmonary resuscitation skills. The system comprises a sensor cluster installed in a manikin comprising a chest plate and a lung. The sensor cluster comprises a distance sensor for measuring chest plate displacement and a pressure pad for measuring external pressure applied to the manikin and for measuring pressure due to expansion of the lung. The computer program product comprises instructions to perform a formative test comprising a first phase for repeatedly receiving sensor data from the manikin and a second subsequent phase for presenting on a screen performance data, a color-coded competence level, and a feedback to improve the performance data.

### Background

Cardiopulmonary resuscitation (CPR) is an emergency procedure that combines chest compression with artificial ventilation in an effort to preserve brain function during cardiac arrest. Its main purpose is to restore partial flow of oxygenated blood to the brain and heart. The European Resuscitation Council has provided guidelines in Resuscitation 95, 81-99 (2015). Preferably, CPR for adults involves chest compressions between 5 and 6 cm deep, at a rate of 100 to 120 per minute. Preferably, the chest should recoil completely before applying a subsequent compression. Preferably, 30 compressions are alternated with 2 ventilations. Preferably, a correct ventilation comprises a visible rise of the chest, more preferably a tidal volume of approximately 500-600 ml. Artificial ventilation can be provided by exhaling air into the subject's mouth while closing its nose or using a device that pushes air into the subject's lungs. CPR alone is unlikely to restart the heart. Defibrillation is usually needed in order to restore a viable heart rhythm.

The quality of CPR is an important determinant of outcome following cardiac arrest. However, when Perkins et al. investigated the effect of the guidelines of the European Resuscitation Council on the resuscitation skills of doctors and nurses by measuring their resuscitation performance during an Advanced Life Support course, they found that the quality of CPR performance during the course was sub-optimal. Delays in starting CPR, shallow compression depth, excessive interruptions in chest compressions and prolonged pre-shock pauses were the major concerns. Poor CPR quality and reluctance to perform CPR have been established as a major issue in healthcare providers, including hospital-based nurses and physicians. Furthermore, with skills deteriorating in as little as three to six months, the European Resuscitation Council and the American Heart Association recommend the use of frequent assessments to identify people requiring additional training. Considerable barriers such as lack of personnel, finding time in the busy work schedules, prevent these regular assessments to take place.

In order to train CPR skills, manikins are often used. A manikin can comprise a lung in communication with one or more respiratory orifices as well as a spring for providing resistance and recoil during chest compressions. Several training methods exist.

Traditionally the trainee is instructed by an instructor. This has the disadvantage that CPR training is costly and time-consuming. Furthermore, the performance of the trainee may be inadequately assessed due to the subjective observation of the instructor.

An objective assessment method had been provided by Laerdal Medical with the Resusci Anne® QCPR® and SkillReporter®. The manikin comprises sensors and is configured to wirelessly send sensor data to a computer running an instructor application providing real-time feedback on hand position, compression rate and depth, ventilation rate and volume, and correct release for each compression. After every test the instructor application provides a debriefing screen on the student's performance. The instructor application also comprises a class overview mode in which the instructor can monitor up to six manikins at one time. Results can be saved. Students can train against one another competition style. This has the disadvantage that an instructor is required. Furthermore, if a student would use the instructor application without instructor, the student receives real-time feedback. This is unrepresentative of an actual emergency situation in which the student is performing CPR without real-time feedback. The student might be able to perform well on all objectively measured parameters, but the student's performance might depend on the presence of real-time feedback.

A formative testing method without instructor has been presented in, for example:
- "Assessing basic life support skills without an instructor: is it possible?" by Mpotos et al. in BMC Medical Education 12, 58 (2012), doi:10.1186/1472-6920-12-58; and
- "Automated testing combined with automated retraining to improve CPR skill level in emergency nurses" by Mpotos et al. in Nurse Education in Practice 15(3), 212-217 (2015), doi:10.1016/j.nepr.2014.11.012.

A manikin comprising sensors was connected to a computer running a software program. The nurses followed the instructions on a computer screen. During the time window for CPR testing, no feedback was presented. After the time window for CPR testing, feedback was provided on the computer screen. Nurses who failed the test also received feedforward in which they were informed about how to improve their individual skills. They could then choose to perform a new test or first practice. Both could take place immediately or at a different moment, in which case the feedback and feedforward of the last test was recalled at the beginning of the new session. Practice was done using full CPR computer exercises with concurrent voice feedback and followed by a new test.

Many manikins without readout sensors for the objective observation of CPR skills have been brought on the market. While new sensorized manikins are available on the market, there remains a need in the art for a simple upgrade of the unsensorized manikins to provide them with reliable sensors.

Furthermore, the Resusci Anne QCPR comprises a hand position sensor, but this sensor had to be mounted in a predefined chest recess and is dedicated for only this purpose.

While the Resusci Anne SkillReporter comprises an instructor application for letting students train against each other competition style, there remains a need in the art for motivating students to self-improve their CPR skills beyond the required bare minimum. Self-competition, in which a student tries to improve his/her former results, is more motivating than social competition. During social competition, it can occur, for example, that a student improves but does not climb the competition ladder, due to, for example, similar skill improvements amongst his/her peers.

WO 2017/029 398 A1 discloses a system for measuring chest compressions in a manikin for CPR training. The manikin comprises a proximity sensor and a reflector. The sensor is positioned in the lower part of the manikin representing the back, while the reflector is positioned at the inside of the upper part representing the chest in relation to a chest plate. The distance between the chest plate and the proximity sensor may be monitored during the CPRtraining. The manikin comprises an inflatable lung positioned in between the chest plate and the outer skin of the manikin, wherein the inflatable lung is connected to the mouth of the manikin.

The present invention aims to resolve at least some of the problems mentioned above.

### Summary of the invention

In a first aspect, the present invention provides a system for the formative testing of cardiopulmonary resuscitation skills according to claim 1.

This is advantageous as the sensor cluster comprising a distance sensor and a pressure pad can be easily installed in a manikin, for example an unsensorized manikin. The installation can be realized by adhesion of components of the sensor cluster to manikin plates with, for example, glue or strongly adhesive double-sided sticky tape. Furthermore, the pressure pad serves the dual purpose of detecting whether a compression or ventilation is performed as well as determining during a ventilation the applied ventilation volume via the force sensed by the pressure pad due to expansion of the lung.

In a preferred embodiment, the system comprises a computing device comprising instructions for the formative testing of cardiopulmonary resuscitation skills according to claim 10.

This is advantageous as the association of a competence level with a trainee's performance motivates a trainee to reach a higher competence level in the future. The competence level therefore stimulates self-competition.

### Description of figures

**Figure 1** shows a schematic representation of an embodiment of a sensor cluster.
**Figure 2** shows a schematic representation of how the sensor cluster of figure 1 can be installed in an embodiment of a manikin.

### Detailed description of the invention

The present invention concerns a system and a computer program product for the formative testing of cardiopulmonary resuscitation skills. A summary of the invention is provided in the thereto provided section above. In what follows, the invention is described in detail, preferred embodiments are discussed, and examples are provided.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

"Computing device" as used herein refers to any computing device. A non-limiting list of examples of computing devices comprises a desktop, a laptop, a tablet, a smartphone, a smartwatch, a server, a supercomputer, a calculator, a music player, a game console, and the like.

"User input device" as used herein refers to any device configured for providing input by a user to a computing device. The input is not limited by modality and can encompass mechanical movement, sound, images, and the like. The input can be discrete and/or continuous. The input is also not limited by the number of degrees of freedom. The input can be direct or indirect. When input is provided on a position or a position change, e.g. to move a pointer on a screen, the input can be absolute or relative. A non-limiting list of examples of user input devices comprises a keyboard, a computer mouse, a touchpad, a touchscreen, a camera, a scanner, a joystick, a microphone, a light pen, a trackball, a projected keyboard, a game controller, a card reader, and the like.

"Data communication" as used herein refers to any analog or digital data communication between computing devices. Data communication can be wired or wireless. Data communication is not limited by the used protocol. A non-limiting list of examples of data communication technologies comprises 2G, 3G, 3GPP, 4G, 6LowPAN, Bluetooth, Bluetooth 4.0, Bluetooth 4.1, Bluetooth 4.2, Bluetooth 5, Bluetooth Low-Energy, CDMA, CDMA2000, Cellular, EDGE, EDGE Evolution, Ethernet, EV-DO, Flash-OFDM, GPRS, GSM, HIPERMAN, HSPA, iBurst, IEEE 802.11a, IEEE 802.11ac, IEEE802.11b, IEEE802.11g, IEEE802.11n, IEEE802.15.4, IEEE802.15.4, IEEE 802.15.4-2006, IEEE 802.16, IEEE 802.16-2009, IEEE 802.16m, IEEE 802.20, Internet, IPv4, IPv6, LAN, LoRaWAN, Low Rate WPAN, LTE, Near Field Communication, Neul, RTT, Sigfox, Thread, UMTS, UMTS W-CDMA, UMTS-TDD, USB, UWB, WAN, Weightless, Wi-Fi, WiMAX, Wireless USB, WLAN, WWAN, ZigBee, and Z-Wave.

In what follows, a light sensor will be used as an embodiment of a distance sensor. One of ordinary skill in the art will appreciate that another distance sensor may be used as an alternative to said light sensor. A non-limiting list of examples of distance sensors comprises an ultrasonic sensor, an electromagnetic sensor, a capacitive sensor, a Doppler-effect sensor, an Eddy current sensor, a photoelectric sensor, an inductive sensor, a magnetic sensor, a mechanical sensor, a radar sensor, an ionizing radiation sensor, a sonar, a fiber optics sensor, and a Hall-effect sensor.

One of ordinary skill in the art will also appreciate that an accelerometer can be used as an alternative to a distance sensor. In particular, double time integration of acceleration data from an accelerometer yields a position of the accelerometer, which allows to use an accelerometer as a distance sensor. The acceleration data may be continuous or discrete in time. Time integration can comprise continuous or discrete time integration. Continuous time integration can be performed by dedicated hardware, such as, for example, an electronic analog integrator. Discrete time integration can be performed by executing computer executable instructions on a computer processor. Time integration can also be performed by a combination of dedicated hardware and the execution of computer executable instructions, for example by hardware integration by an electronic analog integrator of a continuous acceleration signal to a continuous velocity signal, the sampling of said continuous velocity signal to a discretized velocity signal, and the numerical integration of the discretized velocity signal to a discretized position signal by executing computer executable instructions on a computer processor. One of ordinary skill in the art will therefore appreciate that an accelerometer therefore also falls under "distance sensor" insofar the accelerometer signals are used to obtain a position or distance measure.

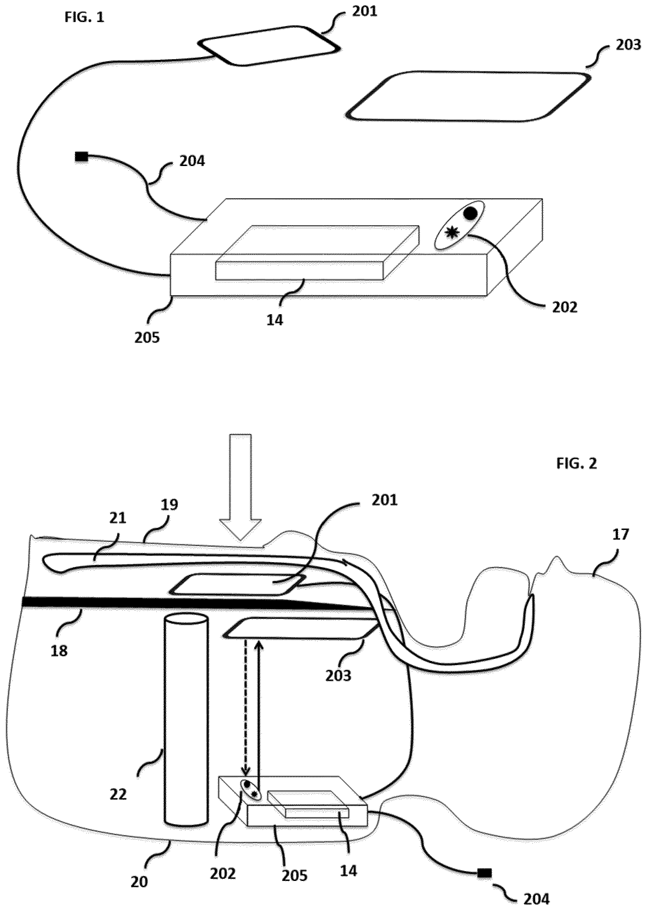

In a first aspect, the invention provides a system for the formative testing of cardiopulmonary resuscitation skills. The system comprises a manikin and a sensor cluster. We now refer to figure 1 for a schematic representation of an embodiment of a sensor cluster according to the present invention. The sensor cluster comprises a light sensor (202), a pressure pad (201), and a processor module (14). The processor module (14) is configured for processing raw data from the light sensor (202) and the pressure pad (201) as well as data communication with an external computing device. External refers hereby to the manikin. In an embodiment, the data communication can be wireless, for example via Bluetooth. In another embodiment, the data communication can be wired, for example via USB cable (204). The sensor cluster can furthermore comprise a reflective plate (203) for use in combination with the light sensor (202). We now refer to figure 2 for a schematic representation of an embodiment of a manikin comprising an embodiment of a sensor cluster according to the first aspect of the current invention. The manikin (17) comprises a bottom plate (20), a top plate (19), and a chest plate (18) in between the top (19) and the bottom (20) plate. The manikin (17) furthermore comprises a lung (21) at least partially in between the top (19) and the chest (18) plate, whereby the lung (21) is in communication with one or more respiratory orifices. The manikin (17) also comprises a spring (22) attached on a first end to the chest (18) plate and on a second end to the bottom (20) plate. The light sensor (202) is able to measure a distance in between the chest (18) and the bottom (20) plate. This distance can be a full distance in between the chest (18) and the bottom (20) plate. This distance can also be a partial distance in between the chest (18) and the bottom (20) plate, for example due to the dimensions of a casing (205) comprising the light sensor (202). The pressure pad (201) is positioned in between the top (19) and the chest (18) plate. Via the pressure pad (201) the system can detect whether an external pressure is applied to the top plate, i.e. whether a compression is performed. The pressure pad (201) can also measure the force or pressure due to expansion of the lung (21) during a ventilation. An externally applied pressure to the top plate is typically significantly larger than a force or pressure due to expansion of the lung (21), which therefore allows to distinguish between both. In a preferred embodiment, the pressure pad (201) comprises a force sensitive resistor. In a preferred embodiment, the casing (205) and the pressure pad (201) are provided with an adhesive layer, which may be covered with a sheet of removable protective material covering the adhesive layer prior to the attachment of the casing (205) and the pressure pad (201) to the manikin (17). If present, the reflective plate (203) may also comprise such an adhesive layer, which may also be covered with a removable protective material prior to attachment.

In a preferred embodiment, the light sensor (202) is attached to the bottom plate (20) and directed towards the chest plate (18). This can be realized, for example, by gluing a casing (205) comprising the light sensor (202) to the bottom plate (20). The system can furthermore comprise a reflective plate (203) which is attached to the chest plate (18) and which is directed towards the light sensor (202). In this embodiment, the pressure pad (201) is positioned in between the top (19) and the chest (18) plate. Preferably, the pressure pad (201) is positioned in between the lung (21) and the chest plate (18). Preferably, the pressure pad (201) is attached to the chest plate (18). In an embodiment, the sensor cluster comprises one or more batteries. In another embodiment, the sensor cluster comprises a power cable and a convertor. In yet another embodiment, the sensor cluster comprises a rechargeable battery pack and a power cable. In another embodiment, the sensor cluster comprises a USB cable for data communication with an external computing device and can be powered and/or recharged via the USB cable.

This is advantageous because the sensor cluster can be easily installed in the manikin. Furthermore, the pressure pad serves the dual purpose of detecting whether a compression or ventilation is performed as well as determining during a ventilation the applied ventilation volume via the force sensed by the pressure pad due to expansion of the lung. The reflective plate allows for a uniform reflection irrespective of the point of incidence of light from the light sensor.

In a preferred embodiment, the light sensor comprises an infrared light emitting diode, a position sensitive detector, and a signal processing unit. This is advantageous as the position sensitive detector allows for a more accurate determination of the reflection distance, and therefore of the chest plate, via triangulation.

In a preferred embodiment, the processor module comprises a microcontroller. The microcontroller comprises a tangible non-transitory microcontroller storage medium comprising instructions to receive raw data from the light sensor and the pressure pad, process said raw data to sensor data, and repeatedly send sensor data to an external computing device. The tangible non-transitory microcontroller storage medium further comprises instructions to distinguish between a compression and a ventilation based on force or pressure sensed by said pressure pad. The microcontroller is configured to send, upon completion of a compression or ventilation cycle, sensor data comprising an indication whether a compression or ventilation was performed and quantitative data related to said compression or ventilation to the external computing device.

This is advantageous as the raw data is interpreted and processed by the microcontroller, and only processed sensor data is communicated. This limits the amount of communication, and therefore the occurrence of transmission errors. This furthermore allows the data communication of the sensor cluster to be realized with a wide range of technologies as the required data bandwidth is limited. Because the output, i.e. the sensor data, is high-level output, a computer-program product for use on the external computing device which is able to further process said sensor data needs to read in and process less data.

In a preferred embodiment, the sensor data comprises, when a compression is performed, information on compression depth, compression timestamp, momentary compression frequency, recoil timestamp, and recoil rest depth. Recoil hereby refers to expansion of the spring and the corresponding distancing of the chest plate from the bottom plate. In a preferred embodiment, the sensor data comprises, when a ventilation is performed, information on chest plate depth, ventilation volume, ventilation start and end timestamp, and momentary ventilation frequency. Hereby, the tangible non-transitory microcontroller storage medium can comprise instructions to determine the ventilation volume based on an earlier performed calibration, whereby the calibration comprises a correlation of the ventilation volume and the force or pressure sensed by the pressure pad.

This is advantageous as this information allows to quantitatively and objectively assess to what extent at least some and preferably all of the guidelines of the European Resuscitation Council for cardiopulmonary resuscitation are met during a formative test.

In an embodiment, the sensor cluster may comprise a capacitive sensor to use in conjunction with the pressure pad for determining externally applied force or pressure and/or ventilation volume due to lung expansion. In case the capacitive sensor data is used to determine ventilation volume due to lung expansion, the calibration may comprise a correlation of the ventilation volume and the capacitive sensor data. The calibration may in this case also comprise a correlation of the ventilation volume and both the pressure pad sensor data as well as the capacitive sensor data.

In a preferred embodiment, the system further comprises said external computing device. The computing device comprises a processor, a screen, a user input device, and a communication module for data communication with the processor module of the sensor cluster. The computing device further comprises a tangible non-transitory storage medium comprising instructions for presenting performance data on the screen. Hereby, the performance data preferably comprises a percentage of compressions with depth within a predetermined depth interval, a percentage of compressions with sufficient recoil, an average compression frequency, and a percentage of ventilations with volume within a predetermined volume interval.

Preferably, the chest compressions have a depth of at least 5 and at most 6 cm. The sufficiency of recoil is determined based on the recoil rest depth. Preferably, the recoil rest depth is less than 1 cm, and more preferably less than 6 mm. Preferably, the average compression frequency is at least 100 and at most 120 per minute. Preferably, the ventilations have a volume of at least 400 ml and at most 1000 ml, and more preferably about 500-600 ml.

This is advantageous as the quality of the cardiopulmonary resuscitation performed on the manikin over a given time interval, e.g. two minutes, is assessed in a limited amount of information. This limited amount of information comprises the percentage of compressions with adequate depth, the percentage of compressions with sufficient recoil, the average compression frequency, and the percentage of ventilations with adequate volume.

In a preferred embodiment, the tangible non-transitory storage medium further comprises instructions for determining whether the preferred rhythm of 30 compressions alternated with 2 ventilations is followed. In a preferred embodiment, the tangible non-transitory storage medium further comprises instructions to assess the hands-off time, i.e. the time when no compressions or ventilations are performed.

In a preferred embodiment, the tangible non-transitory storage medium comprises instructions to perform a formative test, in which the formative test comprises a first data-gathering phase for repeatedly receiving sensor data from the processor module during a predetermined amount of time and a second subsequent phase for presenting on the screen said performance data based on the received sensor data as well as information on how to obtain improved performance data during a future formative test. Preferably, the tangible non-transitory storage medium comprises instructions to require a minimum number of compressions during said data-gathering phase in order to obtain a validly performed and comparable formative test.

This is advantageous, as a student does not receive feedback during the first data-gathering phase. The quality of the cardiopulmonary resuscitation skills of the student will therefore not become dependent on real-time feedback. Furthermore, feedforward is provided during the second phase in order to improve the performance of a student during future formative tests. Preferably, during a future formative test, a student is presented with the information on how to obtain improved performance data prior to the data-gathering phase of this future formative test.

In a preferred embodiment, the tangible non-transitory storage medium comprises instructions to associate a competence level to a global percentage score, whereby the global percentage score is based at least in part on the performance data. Preferably, the competence level is bronze for a global percentage score of at least 70% and less than 80%, silver for a global percentage score of at least 80% and less than 90%, gold for a global percentage score of at least 90% and less than 100%, and expert for a global percentage score of 100%.

This is advantageous as the association of a competence level with the performance data stimulates students to self-improve by addressing their desire to reach a higher competence level during a future formative test.

In a preferred embodiment, a global percentage score of 70% or more requires the average compression frequency to be at least 100 per minute and at most 120 per minute. In this embodiment, when the average compression frequency is adequate, the global percentage score is the minimum of the percentage of compressions with adequate depth, the percentage of compressions with sufficient recoil, and the percentage of ventilations with adequate volume.

In a preferred embodiment, the system comprises a server comprising a user record database and a certification database. The system is configured for data communication between the computing device and the server, for example via Wi-Fi or Ethernet. The user record database comprises a multitude of stored formative tests, whereby each stored formative test comprises a unique identifier for person identification as well as the performance data. Unique hereby refers to the user record database, i.e. an identifier in the user record database corresponds to one person only. A non-limiting list of examples of unique identifiers comprises a username, an e-mail address, a social security number, and a national insurance number (Dutch: rijksregisternummer). In addition to the performance data, a stored formative test may also comprise the sensor data. The certification database comprises a multitude of cardiopulmonary resuscitation certifications. Each cardiopulmonary resuscitation certification comprises identification data of a tested person as well as a global percentage score based at least in part on the performance data of a completed formative test. The identification data of a tested person may comprise one or more of the following: surname, given name, date of birth, place of birth, gender, and national insurance number.

Access to the server may be restricted by well-known means such as, for example, a username and password or an RSA-key. Access to the user record database may be restricted by well-known means such as, for example, a username and password or an RSA-key. Access to the certification database may be restricted by well-known means such as, for example, a username and password or an RSA-key.

This is advantageous as the server allows to recall the performance data of a student of a previous formative test to present the student with information on how to obtain improved performance data prior to the data-gathering phase of a new formative test. The feedforward may therefore be repeated at a later point in time. This is further advantageous as it allows an overview of certifications for large groups of people, for example to know which persons of the staff of a hospital require training and/or formative testing, and which persons are capable of performing cardiopulmonary resuscitation.

In a preferred embodiment, the system comprises a two-level cart comprising wheels for moving the manikin comprising the sensor cluster and the external computing device. The cart comprises a first level for supporting the computing device and a second level, lower than the first level, for supporting the manikin. Cardiopulmonary resuscitation is typically performed kneeling. The second level is provided at about 60 cm above the floor to simulate the height of a bed, but the second level can also be even lower than 60 cm above the floor, for example to simulate a patient lying on the floor. This is advantageous for moving the equipment required for formative testing around in a large institution, such as, for example, a hospital, where different departments may practice at different moments in time. The cart may then be placed at different departments, for example, on a weekly basis. Personnel may opt to train during calmer working hours, breaks, or prior to or after their shifts.

In a second aspect, the present invention concerns a computer program product for the formative testing of cardiopulmonary resuscitation skills. The computer program product may be designed for use with a system according to the first aspect of the present invention, as one of ordinary skill in the art will readily appreciate. The computer program product comprises a client set of instructions for execution on a computing device. The computing device comprises a screen and is configured for data communication with a manikin, to repeatedly receive sensor data from the manikin. The client set of instructions comprises instructions to perform a formative test. The formative test comprises a first data-gathering phase to repeatedly receive sensor data from the manikin and a second subsequent phase for presenting on the screen:
- performance data based on the sensor data;
- a global percentage score based on the performance data; and
- a detailed feedback to improve future performance data.

The client set of instructions further comprise instructions for associating a competence level to the global percentage score and for presenting on the screen a color-coded visual representation of the competence level. Preferably, the competence level is bronze for a global percentage score of at least 70% and less than 80%, silver for a global percentage score of at least 80% and less than 90%, gold for a global percentage score of at least 90% and less than 100%, and expert for a global percentage score of 100%.

This is advantageous as a non-expert competence level stimulates students to self-improve to reach a higher competence level during a future formative test. The feedback, i.e. the assessment to improve future performance data, may be provided by means of text, graphs, or visuals.

In a preferred embodiment, the client set of instructions comprise instructions to determine based on the repeatedly received sensor data the following performance data: a percentage of compressions with depth within a predetermined depth interval, a percentage of compressions with sufficient recoil, an average compression frequency, and a percentage of ventilations with volume within a predetermined volume interval.

This is advantageous as the quality of the cardiopulmonary resuscitation can be assessed by a limited amount of information and in a limited amount of time.

In a preferred embodiment, the computer program product comprises a server set of instructions for execution on a server comprising a certification database. The server may be a local server, a remote server, or a part of a module running on a cloud server. The server and the computing device are configured for mutual data communication, for example via Wi-Fi or Ethernet as noted before. The server set of instructions comprise instructions for storing identification data of a tested person and certification data based at least in part on a completed formative test in the certification database. Hereby, the certification database comprises a list of expiry dates of certifications. Alternatively or in addition, the certification data may comprise a date indicative of an expiry date, such as, for example, the date of completion of the formative test or the expiry date itself. The server set of instructions comprise instructions for sending a message to notify an upcoming expiry date, preferably for sending an e-mail comprising said message. The message can be sent to a previously tested person. The message can also be sent to an institution, for example a hospital, employing a previously tested person or for which the previously tested person performs voluntary work. This is advantageous as it helps to ascertain continuous certification of a person for performing cardiopulmonary resuscitation.

In a preferred embodiment, the server comprises a user record database comprising a multitude of stored formative tests, each stored formative test comprising performance data as well as a unique identifier for person identification. The computing device comprises a user input device. The client set of instructions comprise instructions for obtaining an identifier via the user input device, sending data based at least in part on said obtained identifier to the server, receiving from the server the performance data of a latest stored formative test comprising said obtained identifier, and presenting on the screen prior to performing a new formative test the performance data, a global percentage score based on the performance data, and an assessment to improve the performance data in the new formative test. This is advantageous as it allows to recall previous feedforward during formative testing.

In a preferred embodiment, the server set of instructions comprise instructions for analyzing the stored formative tests in the user record database. A stored formative test may comprise a tag comprising an institution. A stored formative test may further comprise a tag comprising geographical information. A stored formative test may in addition to the unique identifier for person identification further comprise an age, a length, and a gender. The server set of instructions may comprise instructions for analyzing the use of the system. The use may comprise use frequency, such as for example, most popular hours during a day, average number of formative tests taken per day, most popular periods (days, weeks, months) during a year. This is advantageous as it allows to assess and improve the frequency of use of the system.

In a preferred embodiment, the client set of instructions comprise instructions to perform statistics on the sensor data of a formative test. In addition to percentage of compressions with adequate depth, average compression depth and the spread (standard deviation) on compression depth may be determined as well. In addition to percentage of compressions with complete recoil, average rest depth and the spread (standard deviation) on rest depth may be determined as well. In addition to average compression frequency, the spread (standard deviation) on the compression frequency may be determined as well. In addition to percentage of ventilations with adequate volume, the average ventilation volume and the spread (standard deviation) on the ventilation volume may be determined as well. In addition, the total time of a ventilation, the average total time of a ventilation, the spread (standard deviation) on the total time of a ventilation, the hands-off time, the average hands-off time, the spread (standard deviation) on the hands-off time, the ventilation frequency, the average ventilation frequency, the spread (standard deviation) on the ventilation frequency may be used as performance parameters as well. In an embodiment, the sensor data may in addition comprise the compression force or the ventilation force. In an embodiment, the sensor data may, when a compression is performed, in addition comprise the compression acceleration. Some or all of these performance parameters can be taken into account in determining the global percentage score.

One of ordinary skill in the art will appreciate that any of the features related to the system can be used with any of the features of the computer program product. The computer program product can, for example, be designed for use with a system according to any one of claims 1 to 11. Alternatively or in addition, the computer program product can, for example, also be designed for use with any of the other system features disclosed in the description or the examples.

In an alternative embodiment, the pressure pad may be used solely to determine whether an external pressure or force is applied to the top plate. The ventilation volume may in this embodiment be determined based on the movement of the chest plate due to expansion of the lung as detected with the light sensor as well as a calibration comprising a correlation between the chest plate movement and the applied ventilation volume.

In a preferred embodiment, the computer program product may comprise instructions for adding, editing, and removing user profiles from the user record database; importing or exporting of data records belonging to a user from the user record database; exporting certifications from the certification database; managing license keys and troubleshooting; generating training statistics from the stored formative tests of one or multiple trainees.

In an embodiment, one single database embodies the user record database and the certification database.

In an embodiment, trainee performance data from real-life interventions may be stored into the user record database. This would create a unique opportunity to measure the effects of an educational intervention on the clinical practice.

In an embodiment, the client set of instructions of the computer program product may comprise instructions to display real-time skills measurement and instant feedback on the screen of the computing device, for users with specific difficulties.

In a preferred embodiment, the client set of instructions may comprise instructions for displaying a HTML web browser interface for user registration, performing a formative test and/or access to the server.

In an embodiment, the certification database may store all certifications from a particular geographic area, such as, for example, a nation, a continent, or the world.

In an embodiment, the client set of instructions may comprise instructions to automatically send log files to the server in case of computer program product malfunctioning or other problems. It may also comprise instructions to allow a user to introduce a license activation key.

The invention is further described by the following non-limiting examples which further illustrate the invention, and are not intended to, nor should they be interpreted to, limit the scope of the invention.

### Examples

### Example 1: Sensor cluster

This example illustrates an embodiment of a sensor cluster according to the present invention.

The sensor cluster comprises the optical distance measuring sensor GP2Y0A41SK0F by Sharp. This sensor is composed of an integrated combination of a position sensitive detector, an infrared light emitting diode, and a signal processing circuit. The variety of reflectivity of the object, the environmental temperature and the operating duration do not easily influence the distance detection due to the adaptation of the triangulation method. The sensor outputs an analog voltage corresponding to the detection distance. A measuring cycle of this sensor requires about 16.5 ms and the delay in output voltage is at most 5 ms. The emitting wavelength of the light emitting diode is 870 nm ± 70 nm.

The sensor cluster further comprises the pressure pad FSR 406 by Interlink Electronics. This pressure pad comprises a single zone force sensing resistor. It comprises a polymer thick film device which exhibits a decrease in resistance with increase in force applied to the surface of the sensor. The sensor comprises a thin square shape with a side of about 43.69 mm. The force sensing resistor comprises a square shape with a side of about 38.10 mm. The pressure pad furthermore comprises a thickness of about 0.45 mm. It is actuated by about 0.1 Newton and is sensitive up to at least 100 Newton.

The sensor cluster further comprises the processor module Arduino UNO Revision 3 comprising the microcontroller ATmega328P. The microcontroller comprises 32 KB flash memory, 2 KB SRAM, and 1 KB EEPROM. The processor clock speed is 16 MHz. It can be connected to a computing device by USB cable.

The microcontroller is programmed to detect whether a compression is applied based on the output of the pressure pad. The microcontroller is further programmed to process the raw data from the optical sensor and the pressure pad to yield sensor data.

Upon completion of a full compression, the sensor data
C D1 | D2 | D3 | D4 | D5 | D6 | D7
is sent to the computing device. Hereby D1 is the compression count, which is reset upon starting a new data-gathering phase. D2 is the negative compression depth in cm. D3 is a timestamp denoting the time of compression. D4 is a timestamp denoting the time of release. When the rest depth is less than 1 cm, D5 is the letter F (full release). When the rest depth is more than 1 cm, D5 is the letter P (partial release). D6 is the momentary compression frequency in inverse minute. D7 is the negative rest depth upon release in cm.

Upon completion of a ventilation, the sensor data
B E1 | E2 | E3 | E4 | E5 | E6 | E7 | E8
is sent to the computing device. Hereby E1 is the ventilation count, which is reset upon starting a new data-gathering phase. E2 is the negative depth in cm as measured by the optical sensor and realized by the lung expansion. E3 is the ventilation volume in ml based on pressure pad data and a calibration comprising a correlation between force sensed by the pressure pad and ventilation volume applied with a calibrated respirator. E4 is a timestamp denoting the start time of the ventilation. E5 is a timestamp denoting the time when the inserted volume is maximal. E6 is a timestamp denoting the end time of the ventilation. E7 denotes the total ventilation time. E8 is the momentary ventilation frequency in inverse minute.

### Example 2: Computer program product

To make use of the formative testing software to assess cardiopulmonary resuscitation skills, a one-time registration may be required. During the one-time registration a username, surname, given name, date of birth, gender, and e-mail address should be provided. In addition, length, weight, and geographic information may be asked as well for demographic purposes. In addition, the registration may enquire whether previous trainings have been performed or certifications have been accredited. The registration may also enquire the nature of such a training or certification. In addition, the registration may also ask to choose a password.

The formative testing software shows instructions on how to perform the cardiopulmonary resuscitation. It may state the overall duration, for example 2 minutes. It may furthermore state the rhythm, for example 30 compressions alternated with 2 ventilations. It may furthermore state the minimal requirements for success. The minimal requirements for success may comprise obtaining a global percentage score of at least 70%. To obtain a global percentage score of at least 70%, the trainee should during the formative test:
- perform compressions of which at least 70% have adequate depth (5 - 6 cm);
- perform compressions of which at least 70% have sufficient recoil (rest depth of less than 1 cm);
- perform compressions with an average frequency of at least 100 per minute and at most 120 per minute; and
- perform ventilations of which at least 70% have adequate volume (400 - 1000 ml).

One of ordinary skill in the art will appreciate that the abovementioned values and ranges for compression depth, chest recoil, average compression frequency, and ventilation volume are based on currently available guidelines for cardiopulmonary resuscitation. If the guidelines change in time, or if they change according to geographic region (if differences would occur between, for example, the United States and Europe), one of ordinary skill in the art will appreciate that the abovementioned values can be adapted accordingly in time or for region.

Prior to the data-gathering phase of the formative test, the performance data of a previously performed formative test may be presented on the screen of the computing device, in conjunction with an assessment comprising textual instructions on how to improve the performance data during the current formative test. The performance data of said previously performed formative test may be obtained from a user record database comprising stored formative tests.

A scenario which requires cardiopulmonary resuscitation may be presented on the screen. The scenario may state that a cardiac arrest has occurred. The scenario may furthermore state that no normal breathing and no normal circulation can be observed. The scenario may furthermore state that emergency services have been alerted. The user can start the data-gathering phase by selecting the corresponding option with a user input device. During the data-gathering phase, a countdown timer may be presented on the screen. After the data-gathering phase, it may be indicated on the screen whether the formative test was completed with success. The screen may furthermore show the obtained competence level. The user may select with the user device the option to view detailed performance data on the screen. This detailed performance data may comprise the percentage of compressions with adequate depth, the percentage of compressions with sufficient recoil, the average compression frequency, and the percentage of ventilations with adequate volume. The detailed performance data may furthermore indicate the number of compressions which were too shallow (compression depth too small) and the number of compressions which were too deep (compression depth too larger). The detailed performance data may furthermore indicate the number of ventilations with too small volume and the number of ventilations with too large volume.

Upon successful completion of the formative test, a certification may be stored in the certification database. Upon successful completion of the formative test, a document containing information regarding said certification may be automatically e-mailed to the e-mail address provided by the trainee during the one-time registration. Upon upcoming expiry of the certification, an e-mail may be sent to said e-mail address to indicate the upcoming expiry. The e-mail protocol used may be the SMTP (Simple Mail Transfer Protocol). The period of validity of a certification may be 1 year. The document may contain the surname, given name, and date of birth of the trainee, as well as the date of successfully completing the formative test, period of validity of the certification, the obtained competence level, and either the required performance data to obtain the obtained competence level or the actually obtained performance data by the trainee.

### Example 3: User record database

The user record database comprises stored formative tests. A stored formative test comprises the performance data of a completed formative test. A stored formative test may comprise, in addition to the performance data, the sensor data on which the performance data is based. The user record database can comprise data fields for the data management of a user, the data fields comprising fields for:
- a name;
- a medical competence, indicative of the user's previous training competence;
- demographic characteristics such as age, gender, length, and weight;
- consent to allow anonymous use of the data for research and quality improvement purposes;
- e-mail address, to send the certificate and/or expiry notification;
- a date indicative of an expiry date of trained medical competence; and
- a verifiable identification key.

### Example 4: Pediatric Basic Life Support

In an embodiment, the invention can be adapted for training in pediatric basic life support. Such modification may be implemented by modifying the computer program product to comprise an assessment of the relevant pediatric cardiopulmonary resuscitation guidelines. The adult-sized training manikin may be replaced by a manikin that simulates for example, a newborn baby, a one-year old child, or a five-year old child, depending on the desired skills to be trained.

## Claims

1. System for the formative testing of cardiopulmonary resuscitation skills comprising a manikin (17) and a sensor cluster, the manikin comprising a bottom plate (20), a top plate (19), a chest plate (18) in between the top and the bottom plate, one or more respiratory orifices, a lung (21) at least partially in between the top and the chest plate in communication with the one or more respiratory orifices, and a spring (22) attached on a first end to the chest plate and on a second end to the bottom plate, the sensor cluster comprising a distance sensor (202) for measuring a distance in between the chest and the bottom plate, preferably said distance sensor comprising a light sensor, the sensor cluster further comprising a processor module (14) for processing raw data and communicating sensor data with an external computing device, **characterized in that,** the sensor cluster further comprises a pressure pad (201) positioned in between the top and the chest plate to measure external pressure applied to the top plate and to measure pressure due to expansion of the lung, preferably said pressure pad comprising a force sensitive resistor.

2. System according to claim 1, wherein said distance sensor comprises a light sensor, wherein the light sensor is attached to said bottom plate and directed towards said chest plate, preferably the sensor cluster further comprising a reflective plate attached to said chest plate and directed towards said light sensor.

3. System according to any one of claims 1 and 2, wherein the distance sensor comprises a light sensor comprising an infrared light emitting diode, a position sensitive detector, and a signal processing unit.

4. System according to any one of claims 1 to 3, the processor module comprising a microcontroller comprising instructions to:
- receive raw data from the distance sensor and the pressure pad;
- process said raw data to sensor data; and
- repeatedly send sensor data to said external computing device,
wherein the microcontroller comprises instructions to distinguish between a compression and a ventilation based on force sensed by said pressure pad, said sensor data comprising an indication whether a compression or ventilation was performed and quantitative data related to said compression or ventilation.

5. System according to claim 4, wherein, when a compression is performed, said sensor data based on said raw data comprises information on:
- a compression depth;
- a compression timestamp;
- a momentary compression frequency;
- a recoil timestamp; and
- a recoil rest depth.

6. System according to any one of claims 4 and 5, said sensor data based on said raw data comprising, when a ventilation is performed, information on:
- a chest depth;
- a ventilation volume;
- a ventilation start timestamp;
- a ventilation end timestamp; and
- a momentary ventilation frequency,
wherein said microcontroller comprises instructions to determine said ventilation volume based on a calibration comprising a correlation of volume and force sensed by said pressure pad.

7. System according to any one of claims 1 to 6, wherein the system further comprises said external computing device, the computing device comprising a processor, a screen, a user input device, a communication module for data communication with said processor module, and a tangible non-transitory storage medium comprising instructions for presenting performance data on said screen, the performance data comprising:
- a percentage of compressions with depth within a predetermined depth interval;
- a percentage of compressions with sufficient recoil;
- an average compression frequency; and
- a percentage of ventilations with volume within a predetermined volume interval.

8. System according to claim 7, wherein the tangible non-transitory storage medium comprises instructions to perform a formative test, in which the formative test comprises a first data-gathering phase for repeatedly receiving sensor data from said processor module during a predetermined amount of time and a second subsequent phase for presenting on the screen said performance data based on the received sensor data and information on how to obtain improved performance data during a future formative test.

9. System according to any one of claims 7 and 8, wherein the tangible non-transitory storage medium comprises instructions to associate a competence level to a global percentage score, the global percentage score based at least in part on the performance data, the competence level bronze for a global percentage score of at least 70% and less than 80%, silver for a global percentage score of at least 80% and less than 90%, gold for a global percentage score of at least 90% and less than 100%, and expert for a global percentage score of 100%.

10. System according to preceding claims 8 and 9, wherein the tangible non-transitory storage medium comprises instructions for presenting on the screen said global percentage score and a color-coded visual representation of the competence level.

11. System according to any one of claims 7 to 10, wherein the system comprises a server comprising a user record database and a certification database, the system configured for data communication between the computing device and the server, the user record database comprising a multitude of stored formative tests, each stored formative test comprising the sensor and/or performance data as well as a unique identifier for person identification, the certification database comprising a multitude of cardiopulmonary resuscitation certifications, each certification comprising a global percentage score based at least in part on the performance data of a completed formative test and identification data of the tested person.

12. System according to preceding claim 11, wherein the server comprises a server set of instructions for execution on the server, the server set of instructions comprising instructions for storing identification data of a tested person and certification data based at least in part on a completed formative test in the certification database, wherein the certification database comprises a list of expiry dates of certifications, the server set of instructions comprising instructions for sending a message to notify an upcoming expiry date to a tested person, preferably for sending an e-mail comprising said message.

13. System according to any one of the preceding claims 11 and 12, wherein the computing device comprises a user input device, wherein the tangible non-transitory storage medium comprises instructions for:
- obtaining an identifier via the user input device;
- sending data based at least in part on said obtained identifier to the server;
- receiving from the server the performance data of a latest stored formative test comprising said obtained identifier; and
- presenting on the screen prior to performing a new formative test the performance data, a global percentage score based on the performance data, and an assessment to improve the performance data in the new formative test

14. System according to any one of claims 7 to 13, wherein the system comprises a cart comprising wheels, the cart comprising a first level to support the computing device, the cart further comprising a second level lower than the first level to support the manikin.

## Patentansprüche

1. System für die formative Prüfung von kardiopulmonaler Reanimation Fähigkeiten, umfassend eine Übungspuppe (17) und ein Sensorcluster, die Übungspuppe umfassend eine Bodenplatte (20), eine obere Platte (19), eine Brustplatte (18) zwischen die Bodenplatte und die obere Platte, ein oder mehr Atemöffnungen, eine Lunge (21) zumindest teilweise zwischen die obere Platte und die Brustplatte in Kommunikation mit ein oder mehr Atemöffnungen, und eine Kompressionsfeder (22) an einem ersten Ende an die Brustplatte befestigt und an einem zweiten Ende an die Bodenplatte, der Sensorcluster umfassend ein Abstandssensor (202) zum Messen eines Abstands zwischen die Brustplatte und die Bodenplatte, wobei vorzugsweise der Abstandssensor einen Lichtsensor umfasst, der Sensorcluster weiter umfassend einen Prozessormodul (14) zur Verarbeitung von Rohdaten und die Kommunikation von Sensordaten mit ein externes Computergerät, **dadurch gekennzeichnet, dass** der Sensorcluster weiter umfassend ein Drucksensor (201), positioniert zwischen die obere Platte und die Brustplatte zum Messen des auf die obere Platte ausgeübten äußeren Drucks und zum Messen des Drucks aufgrund der Expansion der Lunge, wobei der Drucksensor vorzugsweise einen kraftempfindlichen Widerstand aufweist.

2. System nach Anspruch 1, wobei der besagter Abstandssensor einen Lichtsensor umfasst, wobei der Lichtsensor an die Bodenplatte angebracht ist und auf die Brustplatte gerichtet ist, wobei den Sensorcluster vorzugsweise eine reflektierende Platte umfasst, die an der Brustplatte befestigt und gerichtet ist in Richtung des Lichtsensors.

3. System nach einem der Ansprüche 1 und 2, wobei der Abstandssensor einen Lichtsensor umfasst, der eine Infrarotlicht emittierende Diode, einen positionsempfindlichen Detektor und eine Signalverarbeitungseinheit umfasst.

4. System nach einem der Ansprüche 1 bis 3, wobei das Prozessormodul einen Mikrocontroller umfasst, der Anweisungen umfasst über:
- Rohdaten von dem Abstandssensor und das Drucksensor empfangen;
- Verarbeiten der besagten Rohdaten zu Sensordaten; und
- wiederholt Sensordaten an das besagter externe Computergerät senden,
wobei der Mikrocontroller Anweisungen zum unterscheiden zwischen einer Kompression und einer Belüftung auf der Grundlage einer durch das Drucksensor erfassten Kraft umfasst, wobei die Sensordaten eine Angabe umfassen, ob eine Kompression oder Beatmung durchgeführt wurde, und quantitative Daten, die sich auf die besagter Kompression oder Beatmung beziehen.

5. System nach Anspruch 4, wobei, wenn eine Kompression durchgeführt wird, besagter Sensordaten die auf den besagten Rohdaten basieren Informationen umfassen über:
- eine Kompressionstiefe;
- ein Kompressionszeitstempel;
- eine momentane Kompressionsfrequenz;
- ein Brustkorbentlastung Zeitstempel; und
- ein Brustkorbentlastung Resttiefe.

6. System nach einem der Ansprüche 4 und 5, besagter Sensordaten die auf den besagten Rohdaten basieren, wenn eine Beatmung durchgeführt wird, Informationen umfassen über:
- eine Brusttiefe;
- ein Beatmungsvolumen;
- ein Beatmungsstart-Zeitstempel;
- ein Beatmungsende-Zeitstempel; und
- eine mittlere Beatmungsfrequenz,
wobei der besagter Mikrocontroller Anweisungen umfasst zum Bestimmen des Ventilationsvolumens basierend auf einer Kalibrierung, die eine Korrelation von Volumen und Kraft umfasst, die von dem Drucksensor erfasst wird.

7. System nach einem der Ansprüche 1 bis 6, wobei das System ferner umfasst das besagter externe Computergerät, das Computergerät umfassend einen Prozessor, einen Bildschirm, eine Benutzereingabevorrichtung, ein Kommunikationsmodul für Datenkommunikation mit besagter Prozessormodul, und ein materielles nichtflüchtiges Speichermedium umfassend Anweisungen zum Darstellen von Leistungsdaten auf dem Bildschirm, wobei die Leistungsdaten umfassen:
- ein Prozentsatz von Kompressionen mit der Tiefe innerhalb eines vorbestimmten Tiefenintervall;
- ein Prozentsatz von Kompressionen mit einem ausreichenden Brustkorbentlastung;
- eine mittlere Komprimierungsfrequenz; und
- ein Prozentsatz von Beatmungen mit Volumen innerhalb eines vorbestimmten Volumenbereichs.

8. System nach Anspruch 7, wobei das materielle nichtflüchtiges Speichermedium, Anweisungen um eine formative Test durchzuführen umfasst, wobei der formative Test eine erste Datenerfassungsphase umfasst zum wiederholten Empfangen von Sensordaten von dem besagter Prozessormodul während einer vorbestimmten Zeitspanne und eine zweite nachfolgende Phase zum Darstellen der Leistungsdaten auf dem Bildschirm basierend auf den empfangenen Sensordaten und Informationen darüber, wie verbesserte Leistungsdaten während eines zukünftigen formativen Tests erhalten werden.

9. System nach einem des Anspruch 7 und 8, wobei das materielle nichtflüchtiges Speichermedium Anweisungen zum Zuordnen eines Kompetenzniveaus zu einem globalen Prozentsatz, den globalen Prozentwert der zumindest teilweise auf den Leistungsdaten basiert, das Kompetenzniveau Bronze für einen globalen Prozentsatz von mindestens 70% umfasst weniger als 80%, Silber für einen globalen Prozentsatz von mindestens 80% und weniger als 90%, Gold für einen globalen Prozentsatz von mindestens 90% und weniger als 100% und Expert für einen globalen Prozentsatz von 100%.

10. System nach einem der vorhergehenden Ansprüche 8 und 9, wobei das materielle nichtflüchtiges Speichermedium Anweisungen umfasst zum Darstellen des besagten globalen Prozentsatzes und eine farbcodierte visuelle Darstellung des Kompetenzniveaus.

11. System nach einem der Ansprüche 7 bis 10, wobei das System einen Server umfasst, der eine Benutzerdatensatzdatenbank und eine Zertifizierungsdatenbank umfasst, wobei das System für die Datenkommunikation zwischen dem Computergerät und dem Server konfiguriert ist, wobei die Benutzerdatensatzdatenbank eine Vielzahl gespeicherter Formativtests umfasst, wobei jeder gespeicherte Formativer Test den Sensordaten und/oder Leistungsdaten umfasst sowie eine eindeutige Kennung zur Personenidentifikation, wobei die Zertifizierungsdatenbank eine Vielzahl von Wiederbelebungszertifizierungen umfasst, wobei jede Zertifizierung eine globalen Prozentsatz umfasst, mindestens teilweise basierend auf den Leistungsdaten eines ausgefüllten Formativen Test und Identifizierungsdaten der geprüfte Person.

12. System nach dem vorhergehenden Anspruch 11, wobei der Server einen Server-Befehlssatz zur Ausführung auf dem Server umfasst, wobei der Server-Befehlssatz Anweisungen umfasst zum Speichern von Identifikationsdaten der geprüfte Person und Zertifizierungsdaten, die zumindest teilweise basiert sind auf eines ausgefüllten Formativen Test in der Zertifizierungsdatenbank, wobei die Zertifizierungsdatenbank eine Liste von Verfallsdaten von Zertifizierungen umfasst, wobei der Server-Befehlssatz Anweisungen zum Senden einer Nachricht zum Benachrichtigen eines bevorstehenden Verfallsdatums an eine geprüfte Person, vorzugsweise zum Senden einer E-Mail, umfassend besagter Nachricht.

13. System nach einem der vorhergehenden Ansprüche 11 und 12, wobei das Computergerät ein Benutzereingabegerät umfasst, wobei das materielle nichtflüchtige Speichermedium Anweisungen für Folgendes umfasst:
- Ermitteln einer Kennung über das Benutzereingabegerät;
- Senden von Daten, die zumindest teilweise auf der erhaltenen Kennung basieren, an den Server;
- Empfangen der Leistungsdaten eines letzten gespeicherten formativen Tests der die erhaltene Kennung enthält, von dem Server; und
- Vor dem Durchführen eines neuen formativen Tests werden auf dem Bildschirm die Leistungsdaten, ein auf den Leistungsdaten basierender globaler Prozentsatz sowie eine Bewertung zur Verbesserung der Leistungsdaten im neuen formativen Test dargestellt

14. System nach einem der Ansprüche 7 bis 13, wobei das System einen Wagen umfasst, der Räder aufweist, wobei der Wagen eine erste Ebene zum Tragen das Computergerät umfasst, wobei der Wagen ferner eine zweite Ebene umfasst, die niedriger ist als die erste Ebene, um die Übungspuppe zu tragen.

## Revendications

1. Système pour test formatif de compétences de réanimation cardio-pulmonaire comprenant un mannequin (17) et un ensemble de capteur, le mannequin comprenant une plaque inférieure (20), une plaque supérieure (19), une plaque de poitrine (18), un ou plusieurs orifices respiratoires, un poumon (21) au moins partiellement entre la partie supérieure et la plaque de poitrine en communication avec ledit un ou plusieurs orifices respiratoires, et un ressort (22) fixé sur une première extrémité à la plaque de poitrine et sur une seconde extrémité à la plaque inférieure, l'ensemble de capteur comprenant un capteur de distance (202) pour mesurer une distance entre la plaque de poitrine et la plaque inférieure, de préférence ledit capteur de distance comprenant un capteur de lumière, l'ensemble de capteur comprenant en outre un module processeur (14) pour traiter des données brutes et la communication des données de capteur avec un dispositif de calcul externe, **caractérisé en ce que** l'ensemble de capteur comprend en outre un capteur de pression (201) positionné entre la partie supérieure et la plaque de poitrine pour mesurer la pression externe appliquée à la plaque supérieure et pour mesurer la pression due à la dilatation des poumons, de préférence ledit capteur de pression comprenant une résistance sensible à la pression.

2. Système selon la revendication 1, dans lequel ledit capteur de distance comprend un capteur de lumière, dans lequel le capteur de lumière est fixée à ladite plaque inférieure et dirigée vers ladite plaque de poitrine, de préférence, le groupe de capteurs comprenant en outre une plaque réfléchissante fixée à ladite plaque de poitrine et dirigé vers ledit capteur de lumière.

3. Système selon l'une quelconque des revendications 1 et 2, dans lequel le capteur de distance comprend un capteur de lumière comprenant une diode émettant de la lumière infrarouge, un détecteur de position, et une unité de traitement de signal.

4. Système selon l'une quelconque des revendications 1 à 3, le module de traitement comportant un microcontrôleur comprenant des instructions pour:
- recevoir des données brutes provenant du capteur de distance et du capteur de pression ;
- traiter lesdites données brutes en données de capteur; et
- envoyer de manière répétée des données de capteur vers un dispositif de calcul externe,
dans lequel le microcontrôleur comprend des instructions pour établir une distinction entre une compression et une ventilation sur la base de la force détectée par ledit capteur de pression, lesdites données de capteur comprenant une indication si une compression ou une ventilation a été effectuée et des données quantitatives relatives à ladite compression ou ventilation.

5. Système selon la revendication 4, dans lequel, lorsqu'une compression est effectuée, lesdites données de détection sur base desdites données brutes comprennent des informations sur:
- la profondeur de compression;
- un horodatage de compression;
- une fréquence de compression momentanée;
- un horodatage du relâchement; et
- une profondeur du relâchement.

6. Système selon l'une quelconque des revendications 4 et 5, lesdites données de détection sur la base desdites données brutes comprenant, quand on effectue une ventilation, des informations sur:
- une profondeur de la poitrine;
- un volume de ventilation;
- un horodatage de démarrage de ventilation;
- un horodatage de fin de ventilation; et
- une fréquence de ventilation momentanée,
dans lequel ledit microcontrôleur comprend des instructions pour déterminer ledit volume de ventilation en fonction d'une calibration comprenant une corrélation du volume et de la force détectée par ledit capteur de pression.

7. Système selon l'une quelconque des revendications 1 à 6, dans lequel le système comprend en outre ledit dispositif de calcul externe, le dispositif informatique comprenant un processeur, un écran, un dispositif d'entrée d'utilisateur, un module de communication pour la communication de données avec ledit module processeur, et un tangible support de stockage non transitoire comprenant des instructions pour la présentation des données de performances sur ledit écran, les données de performance comprenant:
- un pourcentage de compression avec la profondeur dans un intervalle de profondeur prédéterminée;
- un pourcentage de compression avec relâchement suffisant;
- une fréquence de compression moyenne; et
- un pourcentage de ventilations avec le volume dans un intervalle de volume prédéterminé.

8. Système selon la revendication 7, dans lequel le support de stockage tangible non transitoire comprend des instructions pour effectuer un test formatif, dans lequel le test formatif comprend une première phase de collecte de données pour recevoir de façon répétée des données de capteur à partir dudit module de processeur pendant un intervalle de temps prédéterminé et une seconde phase ultérieure pour la présentation sur l'écran lesdites données de performance sur base des données de capteur reçues et des informations sur la façon d'obtenir des performances améliorées lors d'un futur test formatif.

9. Système selon l'une quelconque des revendications 7 et 8, dans lequel le support de stockage tangible non transitoire comprend des instructions pour associer un niveau de compétence à un score global en pourcentage, le score global en pourcentage basé au moins en partie sur les données de performance, le niveau de compétence bronze pour un score global de pourcentage d'au moins 70% et moins de 80%, l'argent pour un score global de pourcentage d'au moins 80% et moins de 90%, l'or pour un score global de pourcentage d'au moins 90% et moins de 100%, et expert pour un score global de pourcentage de 100%.

10. Système selon les revendications précédentes 8 et 9, dans lequel le support de stockage tangible non transitoire comprend des instructions pour la présentation sur l'écran ledit score global de pourcentage et une représentation visuelle avec code couleur du niveau de compétence.

11. Système selon l'une quelconque des revendications 7 à 10, dans lequel le système comprend un serveur comprenant une base de données d'enregistrement d'utilisateur et une base de données de certification, le système configuré pour la communication de données entre le dispositif informatique et le serveur, la base de données d'enregistrement d'utilisateur comprenant une multitude de tests formatifs stockées, chaque test formatif stocké comprenant les données capteur et / ou de performance ainsi qu'un identifiant unique pour l'identification des personnes, la base de données de certification comprenant une multitude de certifications de réanimation cardio-pulmonaire, chaque certification comprenant un score global de pourcentage au moins en partie base sur les données de performance d'un test formatif complété et les données d'identification de la personne testée.

12. Système en accord avec la revendication précédente 11, dans lequel le serveur comprend un ensemble d'instructions sur le serveur pour l'exécution sur le serveur, l' ensemble d'instructions sur le serveur comprenant des instructions pour stocker des données d'identification d'une personne testée et des données de certification basée au moins en partie sur un test formatif achevé dans la base de données de certification, dans lequel la base de données de certification comprend une liste des dates d'expiration des certificats, l' ensemble d'instructions sur le serveur comprenant des instructions pour l'envoi d'un message pour notifier une date d'expiration à venir à une personne testée, de préférence pour envoyer un e-mail comprenant ledit message.

13. Système selon l'une quelconque des revendications précédentes 11 et 12, dans lequel le dispositif informatique comprend un dispositif d'entrée d'utilisateur, dans lequel le support de stockage tangible non transitoire comprend des instructions pour:
- l'obtention d'un identifiant par l'intermédiaire du dispositif d'entrée d'utilisateur;
- l'envoi de données sur base au moins et en partie du dit identificateur obtenu vers le serveur;
- recevoir du serveur les données de performance d'un dernier test formatif enregistré comprenant ledit identifiant obtenu; et
- présenter à l'écran avant d'effectuer un nouveau test formatif les données de performance, un score global en pourcentage sur base des données de performance, et une recommandation pour améliorer les performances dans un nouveau test formatif

14. Système selon l'une quelconque des revendications 7 à 13, dans lequel le système comprend un chariot comportant des roues, le chariot comprenant un premier niveau pour soutenir le dispositif de calcul, le chariot comprenant en outre un deuxième niveau inférieur au premier niveau pour soutenir le mannequin.
